# EUROPÄISCHE PATENTANMELDUNG

(11) **EP 2 048 326 A2**
(43) Veröffentlichungstag der Anmeldung: **15.04.2009**
(21) Anmeldenummer: 08016819.8
(22) Anmeldetag: 25.09.2008
(51) Int. Cl.: F01D 9/02, F02C 6/12

(54) **Twin-scroll-Abgasturbolader**

(30) Priorität: 10.10.2007 DE 102007048666
(71) Anmelder: Bayerische Motoren Werke Aktiengesellschaft, 80809 München (DE)
(72) Erfinder: Schleusener, Michael, 81667 München (DE); Wibmer, Michael, Dr., 81379 München (DE)

(57) **Zusammenfassung**

Twin-scroll Abgasturbolader (1), dessen Turbine in einem Turbinengehäuse (2) angeordnet ist mit einem zweiflutigen Abgaseinlaufbereich (3), der in zwei spiralförmige Strömungskanäle (4, 4') mündet, die sich weitgehend parallel zueinander radial außen um die Turbine im Turbinengehäuse (2) erstrecken, wobei die Strömungskanäle (4, 4') durch eine sich radial nach innen erstreckende, vom Turbinengehäuse (2) gebildeten Trennwand (5) getrennt sind und radial außen von dem Turbinengehäuse (2) begrenzt sind, wobei die radial außen liegenden Turbinengehäusebegrenzungen zungenförmig (6, 6') bis in den Abgaseinlaufbereich (3) ragen, wobei eine Zunge (6, 6') um einen Winkel (α) zwischen 1° und 90° weiter in Richtung des Abgaseinlaufbereiches (3) ragt als die andere Zunge (6, 6').

Durch den erfindungsgemäßen zungenförmigen Auslauf der spiralförmigen Strömungskanäle (4, 4') in den Abgaseinlaufbereich (3) hinein wird eine Rissgefahr im Zungenbereich deutlich reduziert, woraus eine erhöhte Lebensdauer und geringere Gewährleistungskosten resultieren.

## Beschreibung

Die Erfindung betrifft einen Twin-scroll-Abgasturbolader mit den Merkmalen aus dem Oberbegriff des Patentanspruchs 1.

Aus der japanischen Offenlegungsschrift JP-A-03151519 ist ein Twin-scroll-Abgasturbolader bekannt, dessen Turbine in einem Turbinengehäuse angeordnet ist mit einem zweiflutigen Abgaseinlaufbereich. Der Abgaseinlaufbereich mündet in zwei spiralförmige Strömungskanäle, die sich weitgehend parallel zueinander radial außen um die Turbine im Turbinengehäuse erstrecken. Die Strömungskanäle werden durch eine, sich radial nach innen erstreckende, vom Turbinengehäuse gebildete Trennwand getrennt und sind radial außen von dem Turbinengehäuse begrenzt. Die radial außen liegenden Turbinengehäusebegrenzungen münden zungenförmig in den Abgaseinlaufbereich. Aus fertigungs- und strömungstechnischen Gründen ragen die beiden Zungen eines gattungsgemäßen Twin-scroll-Abgasturboladers gleich weit in den Abgaseinlaufbereich, d. h. sie spannen eine Ebene auf.

Bei der bekannten Anordnung entstehen jedoch beim Aufheizen und Abkühlen des Turbinengehäuses im Betrieb hohe thermomechanische Spannungen und infolgedessen treten plastische Dehnungen auf. Auf Dauer können im Zungenbereich Risse entstehen, die zum Ausfall des Twin-scroll-Abgasturboladers führen können.

Aufgabe der vorliegenden Erfindung ist es, eine Maßnahme aufzuzeigen, wie die thermomechanischen Belastungen und somit das Risiko einer Rissbildung im Zungenbereich deutlich verringert oder verhindert werden kann.

Diese Aufgabe wird durch das Merkmal im kennzeichnenden Teil des Patentanspruches 1 gelöst.
Durch die erfindungsgemäße Ausgestaltung wird die Rissgefahr im Zungenbereich deutlich reduziert, woraus eine erhöhte Lebensdauer des Twin-scroll Abgasturboladers sowie geringere Gewährleistungskosten resultieren. Darüber hinaus ist der Betrieb der Brennkraftmaschine bei deutlich höheren Abgastemperaturen möglich, woraus in vorteilhafter Weise ein geringerer Kraftstoffverbrauch resultiert, da eine Kühlung des Abgases mit Kraftstoff entfallen kann.

Die Ausgestaltungen gemäß der Patentansprüche 2 und 3 sind besonders bevorzugte Ausführungsvarianten.

Bevorzugt ist das Turbinengehäuse des Twin-scroll Abgasturboladers gemäß Patentanspruch 4 ein Gussgehäuse.

Im Folgenden ist die Erfindung anhand eines besonders bevorzugten Ausführungsbeispieles in zwei Figuren näher erläutert.
- Fig. 1: zeigt einen Schnitt durch ein Turbinengehäuse eines Twin-scroll Abgasturboladers.
- Fig. 2: zeigt einen Schnitt durch einen Abgaseinlaufbereich eines Twin-scroll Abgasturboladers.

Im Folgenden gelten für gleiche Bauelemente in beiden Figuren die gleichen Bezugsziffern.

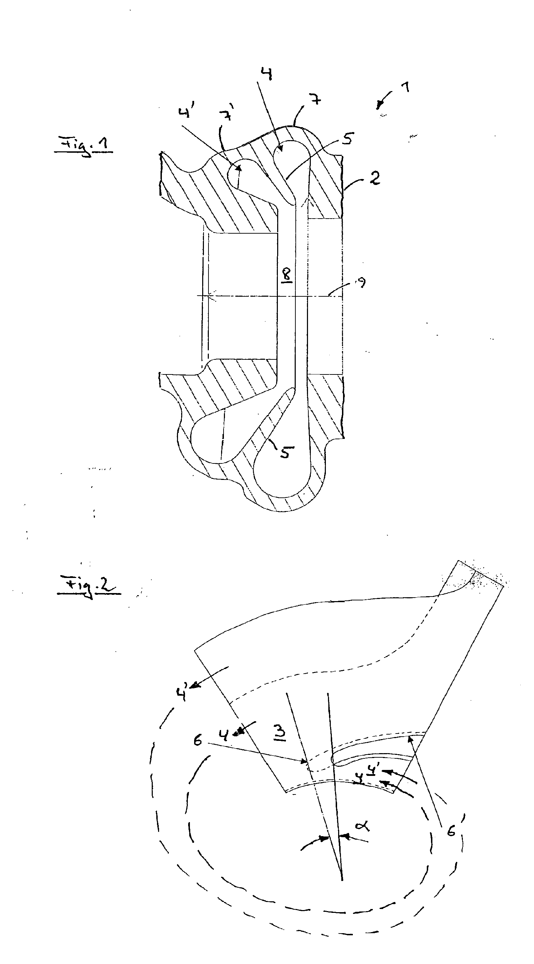

Fig. 1 zeigt einen Schnitt durch ein Turbinengehäuse 2 eines Twin-scroll Abgasturboladers 1. Das Turbinengehäuse umschließt eine Achse 9, in einem Turbinenraum 8, in dem eine nicht dargestellte Turbine anordenbar ist. Radial außen um die nicht dargestellte Turbine erstrecken sich zwei Strömungskanäle 4, 4', die jeweils separat von einer Zylindergruppe mit Abgas beaufschlagbar sind. Über einen, in Fig. 2 dargestellten Abgaseinlaufbereich 3 werden die Abgase der Zylindergruppen in die Strömungskanäle 4, 4' geleitet. Anschließend strömen die Abgase weiter durch die sich verjüngenden, spiralförmigen Strömungskanäle 4, 4', bis die Strömungskanäle 4, 4' wieder in den Abgaseinlaufbereich 3 münden. Durch das Umströmen der Turbine mit Abgas wird diese in Rotation versetzt.

Die Strömungskanäle 4, 4' werden durch das Turbinengehäuse 2 gebildet, das sich radial außen um die Strömungskanäle 4, 4' erstreckt und diese begrenzt. Weiter werden die Strömungskanäle 4, 4' durch eine Trennwand 5 voneinander getrennt, die ebenfalls von dem Turbinengehäuse 2 gebildet ist. Beim Übergang der Strömungskanäle 4, 4' in den Abgaseinlaufbereich ragen die radial außen liegenden Turbinengehäusebegrenzungen 7, 7' zungenförmig bis in den Abgaseinlaufbereich 3 hinein. Erfindungsgemäß ragt eine Zunge 6, 6' um einen Winkel α zwischen 1 ° und 90° weiter in den Abgaseinlaufbereich 3 hinein als die andere Zunge 6, 6'. Erkennbar ist dies in Fig. 2. Im vorliegenden Ausführungsbeispiel beträgt der Winkel α beispielsweise 8°.

Die Zungenenden können beispielsweise weitgehend senkrecht zur Trennwand 5 ausgeformt sein. In anderen Ausführungsbeispielen ist es auch möglich, dass zumindest ein Zungenende gekrümmt, bzw. unter einem Winkel ungleich 90° zur Trennwand 5 ausgeformt ist, wobei das andere Zungenende unter einem Winkel von etwa 90° zur Tennwand 5 ausgeformt sein kann, oder beide Zungenende weisen einen Winkel ungleich 90° zur Trennwand 5 auf. Je nach Turbinengehäusegeometrie ist somit eine Feinoptimierung der Zungenendengeometrie möglich. Bevorzugt ist das Turbinengehäuse 2 ein Gussgehäuse, da im Gießverfahren die erfindungsgemäßen ungleich langen Zungenenden besonders einfach herstellbar sind.

Durch die räumliche Trennung der beiden Zungen 6, 6' in zueinander versetzten Ebenen hat jede einzelne Zunge 6, 6' die Möglichkeit sich unabhängig von der anderen Zunge 6, 6' zu verformen. Die thermomechanischen Spannungen und die daraus resultierenden Dehnungen im Zungenbereich werden somit deutlich reduziert.

Durch die erfindungsgemäße Ausgestaltung wird die Rissgefahr im Zungenbereich deutlich reduziert, woraus eine erhöhte Lebensdauer des Twin-scroll Abgasturboladers sowie geringere Gewährleistungskosten resultieren. Darüber hinaus ist der Betrieb der Brennkraftmaschine bei deutlich höheren Abgastemperaturen möglich, woraus in vorteilhafter Weise ein geringerer Kraftstoffverbrauch resultiert, da eine Kühlung des Abgases mit Kraftstoff entfallen kann.

### Bezugszeichenliste:

- 1.: Twin-scroll Abgasturbolader
- 2.: Turbinengehäuse
- 3.: Abgaseinlaufbereich
- 4, 4': Strömungskanal
- 5.: Trennwand
- 6, 6': Zunge
- 7, 7': Turbinengehäusebegrenzung
- 8.: Turbinenraum
- 9.: Achse

## Patentansprüche

1. Twin-scroll Abgasturbolader (1), dessen Turbine in einem Turbinengehäuse (2) angeordnet ist mit einem zweiflutigen Abgaseinlaufbereich (3), der in zwei spiralförmige Strömungskanäle (4, 4') mündet, die sich weitgehend parallel zueinander radial außen um die Turbine im Turbinengehäuse (2) erstrecken, wobei die Strömungskanäle (4, 4') durch eine sich radial nach innen erstreckende, vom Turbinengehäuse (2) gebildeten Trennwand (5) getrennt sind und radial außen von dem Turbinengehäuse (2) begrenzt sind, wobei die radial außen liegenden Turbinengehäusebegrenzungen (7, 7') zungenförmig (6, 6') bis in den Abgaseinlaufbereich (3) ragen,
**dadurch gekennzeichnet, dass** eine Zunge (6, 6') um einen Winkel (α) zwischen 1° und 90° weiter in Richtung des Abgaseinlaufbereiches (3) ragt als die andere Zunge (6, 6').

2. Twin-scroll Abgasturbolader nach Patentanspruch 1,
**dadurch gekennzeichnet, dass** zumindest ein Zungenende weitgehend senkrecht zur Trennwand (5) ist.

3. Twin-scroll Abgasturbolader nach Patentanspruch 1,
**dadurch gekennzeichnet, dass** zumindest ein Zungenende gekrümmt zur Trennwand (5) ist.

4. Twin-scroll Abgasturbolader nach einem der Patentansprüche 1 bis 3,
**dadurch gekennzeichnet, dass** das Turbinengehäuse (2) ein Gussgehäuse ist.
